(19) Europäisches Patentamt
European Patent Office
Office européen des brevets

(11) EP 1 865 334 A1

(12) EUROPEAN PATENT APPLICATION

(43) Date of publication:
12.12.2007 Bulletin 2007/50

(51) Int Cl.:
G01S 1/00 (2006.01)

(21) Application number: 07109603.6

(22) Date of filing: 05.06.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK YU

(30) Priority: 06.06.2006 US 422523

(71) Applicant: Honeywell International Inc.
Morristown, NJ 07962 (US)

(72) Inventors:
• Meyers, David W.
Brooklyn Park, MN 55443 (US)
• Schipper, Brian W.
Brooklyn Park, MN 55443 (US)
• Vallot, Lawrence C.
Shoreview, MN 55126 (US)

(74) Representative: Haley, Stephen
Gill Jennings & Every LLP
Broadgate House
7 Eldon Street
London EC2M 7LH (GB)

(54) System and method for enhancing the performance of satellite navigation receivers

(57) A system and method for enhancing the performance of satellite navigation receivers are disclosed, which incorporate a precise frequency reference in a satellite navigation receiver that reduces the system's dependence on maintaining continuous satellite reception for RAIM availability. As one example, a system for enhancing the performance of a satellite navigation receiver is disclosed, which includes a GPS receiver and a high precision (e.g., atomic) clock incorporated into the GPS receiver. The use of the high precision clock reduces clock error and the number of satellite measurements needed to meet existing RAIM availability requirements. For example, incorporating a precision clock into a GPS receiver provides an enhanced system that meets existing RAIM availability requirements with at least one less satellite measurement than the number needed for prior systems using RAIM.

Fig. 4

## Description

The present invention relates generally to the navigation system field, and more specifically, but not exclusively, to a system and method for enhancing the performance of satellite navigation receivers, and more precisely, GPS receivers augmented with Receiver Autonomous Integrity Monitoring (RAIM).

The increasing use of Global Positioning System (GPS) receivers in aircraft for precision navigation applications requires systems that can provide accurate navigation information having a very high degree of integrity. Any potentially inaccurate navigation information for a safety-of-life application (e.g., precision approach, landing, etc.) must be identified before a positioning error can be allowed to occur. As such, current aviation safety standards require the use of RAIM to check the integrity of the GPS navigation solutions, in order to ensure the overall safety of the air traffic system while an aircraft is executing a precision approach and/or other safety-critical navigation application. In this regard, digital processors in GPS receivers execute RAIM algorithms embodied in software, which can detect satellite failures and also increase the integrity and accuracy of the GPS navigation solutions obtained. In particular, existing RAIM algorithms use multiple GPS satellite measurements for checking integrity, and current availability standards for RAIM require the use of measurements from five or more satellites plus suitable geometries for the satellites involved.

Notwithstanding the advantages of GPS navigation with RAIM, a significant problem that occurs is that precision approaches attempted by aircraft using GPS with RAIM are frequently interrupted by RAIM outages caused by the loss of measurement signals due to reduced availability or unsuitable geometries of the satellites involved. Additionally, RAIM performance depends to a great extent on certain computations associated with internal clock errors in the GPS receiver. However, the internal clocks in existing GPS receivers are fairly inaccurate. For example, GPS receiver internal clock errors are derived from transmission link margins of the satellites involved, and the transmission link margins for the satellites are derived from their respective transmission paths and geometries. In any event, the existing constellation of GPS satellites has well-known transmission path and geometry deficiencies that contribute to the frequent interruptions in RAIM coverage. Therefore, a pressing need exists for a system and method that can enhance the performance of satellite navigation receivers augmented with RAIM. As described in detail below, the present invention provides such a system and method, which resolve the above-described measurement availability problems for satellite navigation receivers using RAIM, and other related problems.

The present invention provides a system and method for enhancing the performance of satellite navigation receivers, and particularly, but not exclusively, GPS receivers augmented with RAIM, by incorporating a precise frequency reference in the satellite navigation receiver that reduces the system's dependence on maintaining continuous satellite reception. In accordance with a preferred embodiment of the present invention, a system for enhancing the performance of a satellite navigation receiver is provided, which includes a GPS receiver and a high precision (e.g., atomic) clock incorporated into the GPS receiver. The use of the high precision clock reduces clock error and the number of satellite measurements needed to meet existing RAIM availability requirements. For this example embodiment, incorporating a precision clock into a GPS receiver provides an enhanced system that meets existing RAIM availability requirements with at least one less satellite measurement than the number needed for prior systems.

## In the Drawings;

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:

**Figure 1** depicts a block diagram of an example system for enhancing the performance of GPS receivers, which can be used to implement a preferred embodiment of the present invention;

**Figure 2** depicts the use of three satellite measurements to derive a 2-dimensional solution, in accordance with teachings of the present invention;

**Figure 3** depicts a graphical representation of a probability function for a generalized chi-squared variable for RAIM, in accordance with a preferred embodiment of the present invention; and

**Figure 4** depicts a flow chart of an example method for enhancing the performance of a satellite navigation receiver, which can be used to implement a preferred embodiment of the present invention.

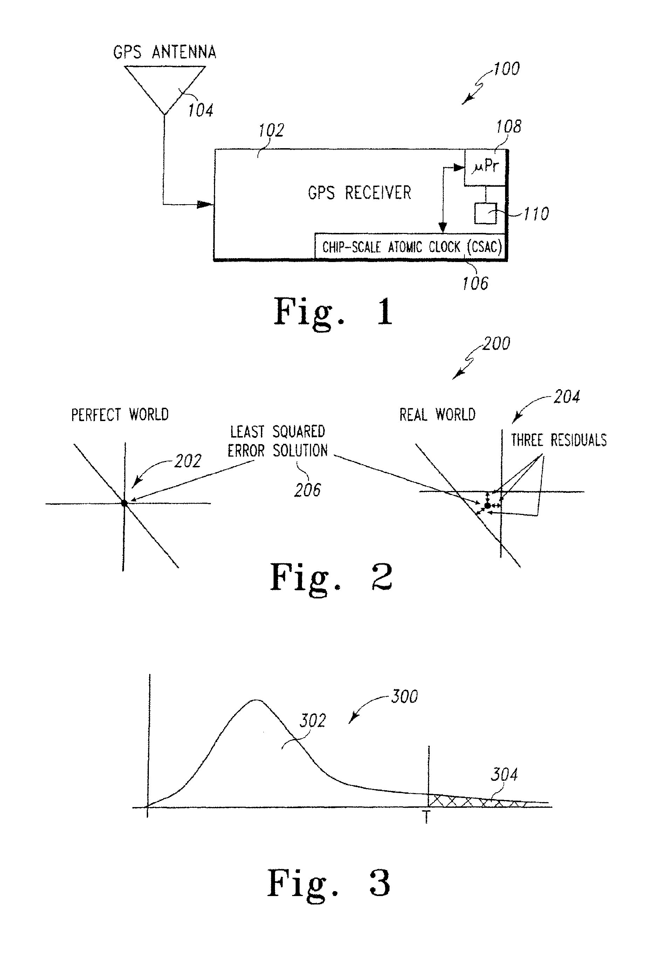

With reference now to the figures, **Figure 1** depicts a block diagram of an example system **100** for enhancing the performance of satellite navigation receivers, which can be used to implement a preferred embodiment of the present invention. For this example embodiment, system **100** includes a GPS receiver **102,** a GPS receive antenna **104,** and a precision frequency generator **106** coupled to GPS receiver **102.** A processing unit **108** (e.g., microprocessor) associated with GPS receiver **102** executes, among other applications, a RAIM algorithm **110.** For this embodiment, precision frequency generator **106** is implemented with a Chip-Scale Atomic Clock (CSAC) integrated into GPS receiver **102.** Thus, by using a precision internal clock **(106)** in GPS receiver **102,** processing unit **108** can execute a precision clock-assisted RAIM algorithm **(110)** to expand RAIM availability, instead of executing a conventional RAIM algorithm using a conventional (fairly inaccurate) internal frequency source/clock. Notably, it should be understood that although system **100** is implemented using a GPS receiver **102** for this example embodiment, the present invention is not intended to be so limited. For example, another embodiment could be implemented using a navigation receiver associated with a different satellite navigation system, such as GLONASS and the like (e.g., augmented with some form of integrity monitoring algorithm, such as RAIM).

In operation, antenna **104** receives signals from a plurality of GPS satellites (not shown), which are detected and processed by receiver **102** to form suitable measurement signals (e.g., pseudorange measurements). At this point, it is useful to consider the following standard GPS position update equations:

$$\overrightarrow{\Delta\rho} = \vec{\rho}_m - \hat{\vec{\rho}} = H\overrightarrow{\Delta x} + \eta \qquad (1)$$

where $\hat{\rho}_m$, is the vector of range measurements to the satellites (from GPS receiver **102**), $\hat{\rho}_i = \left\| \overrightarrow{SV_i} - \bar{x}_{k+1} \right\|$ is the predicted range measurement to a satellite $i$ based on the current estimated position ($\bar{x}$) and the satellite's position $(\overrightarrow{SV_i})$, $\hat{\vec{\rho}}$ is the vector of the predicted range measurement $\hat{\rho}_i$. H is a matrix composed of the line-of-sight vectors from the current estimated position, ($\bar{x}$), to the satellite and augmented with a "1" in the right-most element, $\overrightarrow{\Delta x}$ is an adjustment to the current estimated position, ($\bar{x}$), corresponding to the range measurements, and $\eta$ is the observed measurement noise.

Next, the least squares solution can be computed as

$$\overrightarrow{\Delta x} = (H^T H)^{-1} H^T \overrightarrow{\Delta\rho} = K\overrightarrow{\Delta\rho} \qquad (2)$$

and the current position of GPS receiver **102** can be updated as

$$\bar{x}_{k+1} = \bar{x}_k + \overrightarrow{\Delta x} \qquad (3)$$

For this example embodiment, the element $\Delta x$ in Equation (3) represents the error in the estimate of the state vector x, where x includes three position error components and one clock error component for GPS receiver **102.**

Next, a Post Update Measurement Residual (PUMR) is defined. When more than four satellite measurements are available (e.g., the 4-dimensional problem is over-determined), a PUMR represents the residual errors in the least-squared error solution for the available measurements (e.g., four). The least squares nature of this solution indicates that it does not match any one of the measurements exactly, but such a solution minimizes the error from each measurement. For example, the minimization of the error from each satellite measurement can be visualized (e.g., in two dimensions) by referring to **Figure 2,** which depicts the use of three satellite measurements to derive a 2-dimensional solution.

As illustrated by the graphical representations depicted in **Figure 2,** the "perfect world" solution **202** has a PUMR that is equal to zero. The "real world" solution **204** indicates that the least squared error solution **(206)** minimizes the sum of the squares of the distances from the solution to each of the measurements involved. As such, a PUMR for a single SV can be computed (e.g., by processing unit **108)** as:

$$\Delta\rho_i = \rho_{m_i} - \hat{\rho}_i \qquad (4)$$

where $\hat{\rho}_i$ is the expected pseudorange measurement to a satellite i given the post-update position/clock error solution.

Next, the new position estimate can be updated (e.g., by processing unit **108)** based on the current measurement $\bar{x}_{k+1}$. Thus, the predicted pseudorange based on the post-update position/clock solution becomes:

$$\hat{\rho}_i = \left\| \overrightarrow{SV_i} - \vec{x}_{k+1} \right\|$$ (5)

and the computed PUMR (e.g., residual of the post-update pseudorange measurement associated with the post-update position/clock solution) can be represented as

$$\overrightarrow{\Delta\rho} = \begin{bmatrix} \Delta\rho_1 \\ \Delta\rho_2 \\ . \\ . \\ \Delta\rho_n \end{bmatrix}$$ (6)

Next, a chi-squared variable can be formed (e.g., by processing unit **108**). For this example embodiment, a chi-squared variable is defined as the sum of N independent (e.g., orthogonal) unit-variance random variables. As such, a set of PUMRs can be manipulated and summed to form a chi-squared variable, by normalizing the individual residuals involved. Note that the number of independent variables is equal to a number of residuals greater than the number of dimensions involved with this solution. For example, five measurements provide one independent residual (i.e., one degree of freedom), because (generally) four elements are solved for in the least squares solution (three position components and one clock error component). This is important to note, because in accordance with the principles of the clock-assisted RAIM of the present invention, only three (position) quantities are solved for directly, and the previously calibrated clock information (calibration performed while the conventional RAIM is available) is also used. Thus, the present invention provides an approach to solve for three unknowns (rather than four), which provides one degree of redundancy (providing a failure detection capability) when only four satellites are available. Also, normalization is required so that the variables become unit-variance variables. Thus, given N degrees of freedom, the chi-squared variables have a known probability distribution function. This information is used to compute a threshold above which the chi-squared variable is declared to indicate a failure in one of its components. This threshold is selected to provide a predetermined false alarm rate. The chi-squared variable will only be larger than the threshold value under normal statistical conditions a certain percentage of the time. For that percentage of the time, a failure in one of the measurements can be falsely indicated (,e.g., by processing unit **108**), while the threshold is being exceeded without actually experiencing a failure.

As noted earlier, it is preferable to normalize the variance of the set of PUMRs, in order to use the PUMRs to compute a true chi-squared variable. When computing a 4-dimensional GPS solution (e.g., three position errors plus one clock error) using five or more measurement values (standard RAIM availability requirement), processing unit **108** can accomplish this normalization by dividing each residual by its expected measurement noise. The expected measurement noise can be assumed to be the same for each satellite, or it can be computed (e.g., by processing unit **108**) based on observed signal-to-noise and/or elevation angle information. As such, the normalization expression needed to form the chi-squared variable is represented as

$$\chi^2 = \overrightarrow{\Delta\rho} R_\rho^{-1} \overrightarrow{\Delta\rho}^T$$ (7)

where $R_\rho$ represents the expected variance of the pseudorange measurements. Whereas $R_\rho$ *can* take a general form, for the case where five or more measurements are being used to determine the four unknowns (e.g., three position unknowns and one clock unknown) for the GPS problem, $R_\rho$ can be represented in the following diagonal form

$$R_\rho = \begin{bmatrix} \sigma_1^2 & 0 & 0 & 0 & 0 \\ 0 & \sigma_2^2 & 0 & 0 & 0 \\ 0 & 0 & . & 0 & 0 \\ 0 & 0 & 0 & . & 0 \\ 0 & 0 & 0 & 0 & \sigma_n^2 \end{bmatrix} \qquad (8)$$

In Equation (8), $\sigma_i$ is the measurement variance (1-sigma) for the pseudorange measurement from satellite i. Thus, the above-described equation for $\chi^2$ (Equation (7)) can be rewritten as

$$\chi^2 = (\Delta\rho_1^2/\sigma_1^2 + \Delta\rho_2^2/\sigma_2^2 + ... + \Delta\rho_n^2/\sigma_n^2) \qquad (9)$$

Note that if all of the elements $\sigma_i$ are assumed to be identical, then Equation (9) can be rewritten as

$$\chi^2 = (\Delta\rho_1^2 + \Delta\rho_2^2 + \Delta\rho_3^2 + ... + \Delta\rho_n^2)/\sigma^2 \qquad (10)$$

**Figure 3** depicts a probability density function **300** for a generalized chi-squared variable for RAIM, which illustrates certain principles of the present invention. Referring to **Figure 3,** the area **302** represents the probability of the normalized chi-squared variable $\chi^2$ having a value less than T, and the area **304** represents the probability of $\chi^2$ having a value greater than T. In other words, the area **304** represents the probability of a false detection, $P_{fd}$. As such, the value of T can be selected based on the requirement set for $P_{fd}$. For example, if a system requirement mandates a threshold level of $F_r$ false alarms per hour, then the number of false alarms allowed per sample can be

$$F = (F_r/3600)/f_s \qquad (11)$$

where $f_s$ is the sampling rate of the measurements in Hz. Thus, the probability of a false detection, T, can be determined (e.g., by lookup) from a chi-squared probability table based on the value selected for F. Assume that the value of each $\Delta_{\rho i} = 0$, except for one value at a time, then Equation (10) can be expressed as

$$\chi^2 = (0 + 0 + ... + \Delta\rho_i^2/\sigma_i^2 + 0 + ... + 0) = T^2 \qquad (12)$$

Then, the corresponding values of $\Delta\tilde{\rho}_i$, can be computed (one-by-one) as

$$\Delta\tilde{\rho}_i = T * \sigma_i \qquad (13)$$

For a particular satellite geometry condition, $K,$ the maximum position error that can result from a normally occurring residual is

$$\overrightarrow{\Delta x} = K \overrightarrow{\Delta\tilde{\rho}} \qquad (14)$$

where

$$\overrightarrow{\Delta \tilde{\rho}} = \begin{bmatrix} 0 \\ \cdot \\ \Delta \tilde{\rho}_i \\ \cdot \\ 0 \end{bmatrix} \qquad (15)$$

Therefore, for any given satellite geometry condition. *K,* a protection limit can be determined, which is equal to the largest position error $\overrightarrow{(\Delta x)}$ introduced by an undetected failure in a single satellite, over the set of satellites being used. For this example embodiment, this protection limit is defined to be the "RAIM protection limit".

As discussed earlier, the conventional RAIM approach used for checking the integrity of GPS navigation solutions is currently used for those situations where five or more satellite measurements are available. However, in accordance with the present invention, RAIM coverage for GPS navigation can be extended to those situations where only four satellites are available, if the GPS receiver (e.g., receiver **102**) includes a frequency oscillator/clock (e.g., atomic clock **106),** which is stable enough so that its drift error can be accurately modeled. For this example embodiment, a very high precision frequency source/clock (e.g., atomic clock **106)** is incorporated into GPS receiver **102** and used instead of a conventional (fairly inaccurate) frequency source/internal clock. In this regard, a method for enhancing the performance of a satellite navigation receiver (e.g., augmented with RAIM) using a very high precision internal clock is shown in

**Figure 4.**

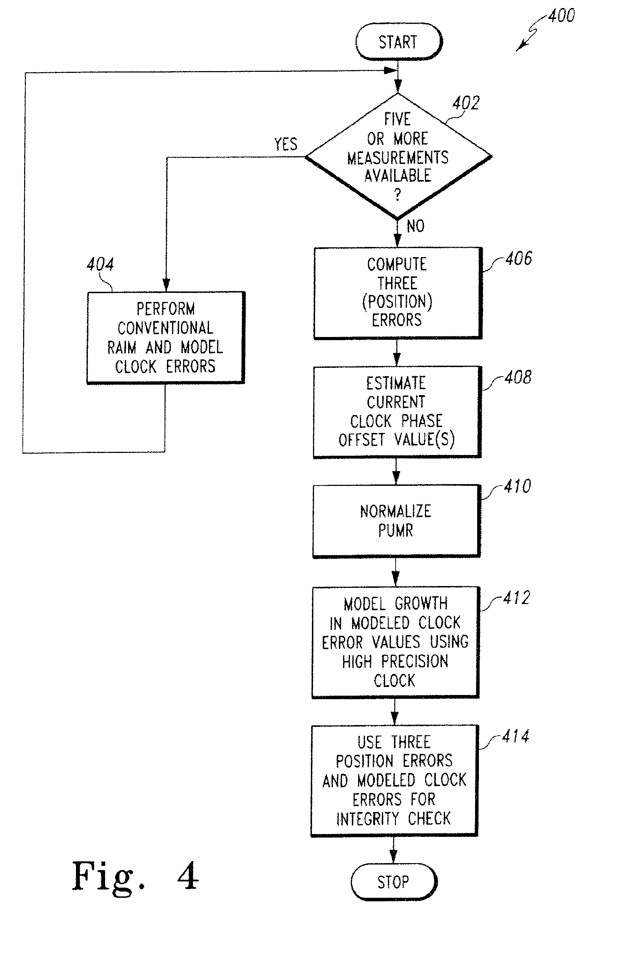

**Figure 4** depicts an example method **400** for extending **RAIM** availability for a satellite navigation receiver, which can be used to implement a preferred embodiment of the present invention. Referring to **Figures 1** and **4** for this example embodiment, processing unit **108** determines if measurements from five or more (e.g., GPS) satellites are available (step **402**). If five or more satellite measurements are available, processing unit **108** models the clock phase offset and frequency offset error parameters (step **404),** which are respectively referred to as $\hat{c}$ and $\hat{\dot{c}}$ . However, if (at step **402**) only four satellite measurements are available, processing unit **108** computes only three unknowns (e.g., position errors) instead of the standard four unknowns (step **406).** In this case, method **400** still provides RAIM-like integrity, because three unknowns (e.g., three position errors) are being computed and four satellite measurements are being used. However, in this case instead of processing unit **108** computing a fourth unknown (clock error) during each measurement epoch, processing unit **108** uses the above-described clock error model to estimate the current clock phase offset values (step **408).** In this regard, for 3-dimensional positioning, the following expression can be used:

$$\overrightarrow{\Delta \rho} = \bar{\rho}_m - \overrightarrow{\hat{\rho}} = H \overrightarrow{\Delta x} + \eta \qquad (15)$$

where $\bar{\rho}_m$ is the vector of the range measurements from GPS receiver **102** to the satellites involved, and

$$\hat{\bar{\rho}} = \left\| \overrightarrow{SV} - \bar{x} \right\| + \hat{c} + \hat{\dot{c}} * \Delta t \qquad (16)$$

is the predicted range measurement to a satellite, which is based on the current estimated position ($\bar{x}$) and the satellite position $\overrightarrow{(SV)}$ adjusted for the estimated clock error using the modeled clock error parameters $\hat{c}$ and $\hat{\dot{c}}$ .

Next, in order to perform RAIM computations using less than five (e.g., four) measurements and modeled clock errors, method **400** normalizes the PUMR (e.g., least-squares solution) for this situation (step **410).** For this case, the normalization matrix can now be expressed as:

$$\chi^2 = \overrightarrow{\Delta\rho} R_\rho^{-1} \overrightarrow{\Delta\rho}^T \qquad (17)$$

which is similar to Equation (12) above, except the element R in Equation (17) now takes on the form

$$R_\rho = \begin{bmatrix} \sigma_1^2 + \sigma_c^2 & \sigma_c^2 & . & . & \sigma_c^2 \\ \sigma_c^2 & \sigma_2^2 + \sigma_c^2 & . & . & \sigma_c^2 \\ . & & . & . & . \\ . & & . & . & . \\ \sigma_c^2 & \sigma_c^2 & . & . & \sigma_n^2 + \sigma_c^2 \end{bmatrix} \qquad (18)$$

In Equation (18), $\sigma_i$ again represents the measurement variance (e.g. 1-sigma) for the pseudorange measurement from satellite i. However, since the modeled clock adds an uncertainty to the value of each element $\hat{\vec{\rho}}$, a clock uncertainty element $\delta_c^2$ is provided in Equation (18). Note, for this example embodiment, that processing unit **108** executes a full matrix inversion computation for Equation (18), because in this case the normalization matrix for the PUMR is not a simple diagonal matrix. Also note, for this example embodiment, that although the value of $\sigma_c$ will increase during the clock error intervals involved, this element is only intended to be modeled and not observed.

In summary, during the time intervals when five or more satellite measurements are available, processing unit **108** observes the clock error values and develops an estimate (model) of the clock phase errors and clock phase rate errors (e.g., can also develop an estimate of the clock phase acceleration errors, if this information is desired). Processing unit **108** uses these modeled parameters to compute predicted range measurements, which are used if the satellite measurement availability is reduced (e.g., only four satellite measurements available for processing instead of five) and RAIM-like (e.g., integrity checking) protection is to be used. Notably, in this case, the modeled clock error values are known to increase over time. Nevertheless, in accordance with the present invention, this growth in the clock error can be suitably modeled by using the specified stability of the high precision frequency source (oscillator) being used. Thus, for this example embodiment, the high precision frequency source used is an atomic clock, which has a typical stated accuracy of $10e^{-11}$. Therefore, for this example embodiment (at step **412)**, the clock uncertainty can be modeled (e.g., by processing unit **108)** with the expression

$$\sigma_c = S_c * \Delta t \qquad (19)$$

where the parameter, $S_c$, represents the specified clock stability, and the parameter, $\Delta t$, represents the time elapsed since the last actual clock value was observed. The computed position error data and the modeled clock error data are thus used by processing unit **108** for RAIM-like integrity checking of the navigation solutions obtained (step **414).**

It is important to note that while the present invention has been described in the context of a fully functioning system for enhancing the performance of satellite navigation receivers, those of ordinary skill in the art will appreciate that the processes of the present invention are capable of being distributed in the form of a computer readable medium of instructions and a variety of forms and that the present invention applies equally regardless of the particular type of signal bearing media actually used to carry out the distribution. Examples of computer readable media include recordable-type media, such as a floppy disk, a hard disk drive, a RAM, CD-ROMs, DVD-ROMs, and transmission-type media, such as digital and analog communications links, wired or wireless communications links using transmission forms, such as, for example, radio frequency and light wave transmissions. The computer readable media may take the form of coded formats that are decoded for actual use in a particular system for enhancing the performance of satellite navigation receivers.

The description of the present invention has been presented for purposes of illustration and description, and is not intended to be exhaustive or limited to the invention in the form disclosed. Many modifications and variations will be apparent to those of ordinary skill in the art. These embodiments were chosen and described in order to best explain the principles of the invention, the practical application, and to enable others of ordinary skill in the art to understand the invention for various embodiments with various modifications as are suited to the particular use contemplated.

## Claims

1. A system (100) for enhancing the performance of a satellite navigation receiver, comprising:

   a satellite navigation receiver (102). the satellite navigation receiver (102) adapted to receive and process a plurality of measurement signals from a plurality of space-based satellite transmitters;
   a precision frequency source (106) associated with said satellite navigation receiver (102); and
   a processing unit (108) coupled to said satellite navigation receiver (102), the processing unit (108) adapted to model a first plurality of frequency errors associated with said precision frequency source (106) if a predetermined number of measurement signals are received and processed by the satellite navigation receiver (102), and estimate a second plurality of frequency errors associated with said precision frequency source (106) if less than the predetermined number of measurement signals is received and processed by the satellite navigation receiver (102).

2. The system (100) of Claim 1. wherein the processing unit (108) is further adapted to:

   compute a plurality of position error values (406);
   estimate a plurality of current clock phase offset values (408);
   define a post update measurement residual associated with the computed plurality of position error values and a clock phase error value;
   normalize the post update measurement residual (410);
   model an increase in the values of the modeled first plurality of frequency errors (412); and
   output the plurality of position error values and modeled increase in the values of the modeled first plurality of frequency errors, if less than the predetermined number of measurement signals is received and processed by the satellite navigation receiver.

3. The system (100) of Claim 1, wherein the satellite navigation receiver (102) is a GPS receiver.

4. The system (100) of Claim 1, wherein the precision frequency source (106) is an atomic clock.

5. The system (100) of Claim 1, wherein the precision frequency source (106) is a Chip-Scale Atomic Clock incorporated in the satellite navigation receiver (102).

6. The system (100) of Claim 1, wherein the satellite navigation receiver (102) comprises a GPS receiver augmented with RAIM.

7. The system (100) of Claim 1, wherein the precision frequency source (106) comprises a frequency generator with a precision substantially equal to that of an atomic clock.

8. The system (100) of Claim 1, wherein the predetermined number of measurement signals comprises at least five measurement signals.

9. The system (100) of Claim 1, wherein the plurality of measurement signals comprises a plurality of pseudorange measurement signals.

10. The system (100) of Claim 1, wherein the processing unit (108) is further adapted to:

    normalize a variance of a set of the post update measurement residuals; and
    compute a chi-squared variable for comparison to a RAIM detection threshold value.

GPS ANTENNA

μPr

GPS RECEIVER

CHIP-SCALE ATOMIC CLOCK (CSAC)

Fig. 1

PERFECT WORLD

LEAST SQUARED ERROR SOLUTION

REAL WORLD

THREE RESIDUALS

Fig. 2

Fig. 3

Fig. 4

**EP 1 865 334 A1**

**European Patent Office**

**EUROPEAN SEARCH REPORT**

Application Number

EP 07 10 9603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG JI-XUN; ZHOU LI-XIAN; FAN YUE-ZU: "General RAIM algorithm based on aiding of receiver clock bias" JOURNAL OF BEIJING UNIVERSITY OF AERONAUTICS AND ASTRONAUTICS, April 2001 (2001-04), pages 161-163, XP009089529 Beijing, China Page 163, equations (1), (2) * abstract * | 1-10 | INV. G01S1/00 |
| X | KOZEL B J ET AL: "Evaluation of GPS precise positioning service autonomous integrity monitoring performance for military applications" POSITION LOCATION AND NAVIGATION SYMPOSIUM, 1996., IEEE 1996 ATLANTA, GA, USA 22-26 APRIL 1996, NEW YORK, NY, USA,IEEE, US, 22 April 1996 (1996-04-22), pages 83-91, XP010163360 ISBN: 0-7803-3085-4 Section "AIM Enhancements" * page 90 * | 1,3-9 | |
| A | US 5 931 889 A (MISRA PRATAP N [US]) 3 August 1999 (1999-08-03) * abstract; figure 2 * * column 4, line 37 - column 8, line 58 * | 1-9 | TECHNICAL FIELDS SEARCHED (IPC) G01S |
| A | WO 02/01157 A1 (SPORTVISION INC [US]) 3 January 2002 (2002-01-03) * page 7, line 24 - page 8, line 7 * | 1-9 | |

The present search report has been drawn up for all claims

| Place of search | Date of completion of the search | Examiner |
|---|---|---|
| Munich | 14 September 2007 | FANJUL CAUDEVILLA, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 10 9603

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2007

| Patent document cited in search report | | Publication date | Patent family member(s) | | Publication date |
|---|---|---|---|---|---|
| US 5931889 | A | 03-08-1999 | US | 5623414 A | 22-04-1997 |
| WO 0201157 | A1 | 03-01-2002 | AU | 8128501 A | 08-01-2002 |

EPO FORM P0459

For more details about this annex : see Official Journal of the European Patent Office, No. 12/82